# EUROPÄISCHE PATENTSCHRIFT

(11) **EP 2 081 415 B1**
(45) Veröffentlichungstag und Bekanntmachung des Hinweises auf die Patenterteilung: **28.04.2010**
(21) Anmeldenummer: 08075041.7
(22) Anmeldetag: 09.01.2008
(51) Int. Cl.: H05B 37/02, H04L 12/24

(54) **Mikrokontroller-gesteuerte Notlichtbeleuchtungsanlage und geeignetes Kommunikationsverfahren hierfür**
Microcontroller-controlled emergency lighting assembly and communication network intended for this purpose
Installation d'éclairage d'urgence commandée par microcontrôleur et procédé de communication approprié

(43) Veröffentlichungstag der Anmeldung: 22.07.2009
(73) Patentinhaber: RP-Technik e. K., 63110 Rodgau (DE)
(72) Erfinder: Sezmener, Erol, Dipl.-Math., 60488 Frankfurt/Main (DE); Ranostaj, Frank, Dipl.-Phys., 60437 Frankfurt/Main (DE)
(74) Vertreter: Cremer & Cremer

(56) Entgegenhaltungen:
- EP-A- 1 513 376
- WO-A-01/93399
- CN-A- 1 987 850
- US-A1- 2003 103 075
- US-A1- 2005 206 241

## Beschreibung

Die vorliegende Erfindung bezieht sich auf eine Mikrokontroller-gesteuerte Notlichtbeleuchtungsanlage bzw. Sicherheitsbeleuchtungsanlage und auf ein Datenaustauschverfahren, mit dem Anlagendaten der Sicherheitsbeleuchtungsanlage verändert werden können.

Der prinzipielle Aufbau von Sicherheitsbeleuchtungsanlagen ist durch entsprechende Normen, z. B. die DIN VDE 0108 für die Bundesrepublik Deutschland, detailliert vorgegeben. Die Begrifflichkeiten der vorliegenden Erfindungsbeschreibung sind an der normungsgemäßen üblichen Sprachwahl von Stromanlagenbauern, insbesondere für Sicherheitsbeleuchtungsanlagen, angelehnt. So wird z. B. durch den Begriff Energieverteiler sowohl ein Hauptverteiler als auch ein Unterverteiler bezeichnet. Die Beleuchtungsmittel werden häufig in die Kategorien Dauerlichtleuchten, Bereitschaftslichtleuchten und geschaltete Dauerlichtleuchten eingeteilt. Daneben gibt es noch modifizierte Bereitschaftslichtleuchten. Die Signalübertragung über die Energieleitungen der im Mischbetrieb angeschlossenen Beleuchtungsmittel sind auch normungsmäßig bestimmt, z. B. in der DIN VDE 0808 für die Bundesrepublik Deutschland. Die dort vorzufindenden Vorgaben beziehen sich vorrangig auf die leitungsgeführte Kommunikation über Energieleitungen wie Stromversorgungskabel.

Eine Notlichtbeleuchtungsanlage umfasst zahlreiche einzelne Bauteile und Komponenten neben den Beleuchtungskörpern, nämlich häufig eine zentrale Schaltanlage, die die Aufgabe des Energieverteilers übernimmt, einzelne Spannungswächter für die Überwachung von Netzabschnitten, Energiequellen, wie z. B. Gleichspannungsquellen, Akkumulatoren, Brennstoffzellenanlagen und Wechselspannungserzeugern, sowie zentrale Steuerungseinheiten. Die Steuerungseinheiten können sich mit und um einen Mikrokontroller herum bilden. Im Sinne der vorliegenden Erfindung werden auch ähnlich funktionierende Schaltkreise, wie zum Beispiel Mikroprozessoren, Einplatinencomputer und Rechnerkerne mit peripheren Bauelementen aus Vereinfachungsgründen als Mikrokontroller nachfolgend bezeichnet. In einer Ausgestaltung wird jedem einzelnen Beleuchtungsmittel ein Vorschaltgerät und ggf. eine Steuereinheit, die als Zustandsfolger bezeichnet werden kann, zugeordnet bzw. vorgeschaltet, in einer alternativen Ausgestaltung werden mehrere Beleuchtungsmittel für den Anschluss an ein Vorschaltgerät zusammengeschlossen. Schaltungstechnische Varianten lassen sich dem Buch "Betriebsgeräte und Schaltungen für elektrische Lampen" der Autoren C. H. Sturm / E. Klein entnehmen, die durch diese Referenzierung in Bezug auf die Ansteuerschaltungen von Beleuchtungsmitteln vollinhaltlich in die vorliegende Erfindungsbeschreibung aus Gründen der besseren Übersichtlichkeit und kompakteren Darstellung aufgenommen sind.

Ausführliche Darstellungen zu Kommunikationsverfahren zwischen Energieverteilern und den daran angeschlossenen Endstromkreisen sind den zum Anmeldezeitpunkt unveröffentlichten Patentanmeldungen DE 10 2007 062 957 und DE 10 2007 062 999 (Anmelderin: RP-Technik e. K.; Anmeldetag: 21.12.2007) und Patentschrift US-A-2003/103075 zu entnehmen, die sich in ihren Darstellungen vorrangig auf den Versorgungsnetzabschnitt ab dem Energieverteiler konzentrieren und durch ihre Referenzen als Teil des Offenbarungsumfangs in Bezug auf Mischbetriebsanlagen zur Verwendung mit vorliegender Erfindung vollinhaltlich inkludiert sind.

Aufgrund des hohen Kostendrucks im Bereich der Sicherheitsbeleuchtungsanlagen kommen bei diesen häufig Mikrokontroller zur Steuerung, Prüfung und Überwachung zum Einsatz, die in ihren Fähigkeiten (Rechengeschwindigkeit, Arbeitsspeicher, Betriebssystem, vorhandene Softwarebibliotheken) gegenüber beispielsweise aktuellen PCs erheblich eingeschränkt sind. Lange Zeit üblich war deshalb die Konfiguration an der Anlage über ein kleines, alphanumerisches Display, insbesondere als LCD. Eine große Anlage mit vielen Betriebsparametern lässt sich jedoch über ein solches Display nur sehr umständlich und mit großem Zeitaufwand konfigurieren. Eine weitere gebräuchliche Möglichkeit der Konfiguration von Sicherheitsbeleuchtungsanlagen besteht über eine spezielle Client-Software von einem PC aus. Die Lösung über eine Client-Software hebt die Einschränkungen eines LCDs auf und lässt insbesondere die Möglichkeit der Fernwartung zu. Nachteilig ist aber, dass die Systemvoraussetzungen der Software erfüllt werden müssen, d. h. konkreter, man muss den passenden Rechner bzw. die passende Berechnungseinheit mit der entsprechenden Hardwarekonfiguration und dem entsprechenden Betriebssystem bereitstellen. Ein Zugang von einer weiteren Berechnungseinheit ist nur durch Neuinstallation der Software auf der weiteren Berechnungseinheit möglich.

Aus der EP 1 513 376 A1 (Anmelderin: CEAG Notlichtsysteme GmbH; Anmeldetag: 04.09.2003) ist ein Beleuchtungssystem bekannt, das mit individuell adressierbaren Beleuchtungsmitteln ausgestattet ist, die über eine zentrale Steuer- und Überwachungseinrichtung ansteuerbar sind. Zur Kommunikation mit der zentralen Steuer- und Überwachungseinrichtung ist eine Interfaceeinrichtung vorgesehen, an die eine zentrale Gebäudeleittechnikeinrichtung anzuschließen ist. Bisher war es üblich, dass jeder Hersteller von Notlichtbeleuchtungssystemen eine proprietäre Software entwickelte, mit der die Notlichtbeleuchtungsanlagen des jeweiligen Herstellers über Standardschnittstellen, wie eine RS-232-Schnittstelle oder einen parallelen Bus, die Kommunikation mit den Energieverteilem, wie z. B. einer Gruppenbatterieanlage oder einer Zentralbatterieanlage, bewerkstelligt wurde. Notlichtbeleuchtungsanlagen sind häufig für die Nutzungsdauer des, häufig öffentlich zugänglichen, Gebäudes ausgelegt, sodass von ein und dem gleichen Hersteller aufgrund der Weiterentwicklung der Anlagentechnik zahlreiche Steuerungs- und Überwachungssoftwaren im Umlauf sind, die häufig auch keine Fernwartbarkeit anbieten. Wird zur Wartung oder zur Reparatur einer komplexen, häufig ein komplettes Gebäude umfassende Sicherheitsbeleuchtungsanlage ein Monteur gerufen, so stellt dieser in vielen Fällen erst vor Ort fest, dass der als Programmier- und Datenaustauschrechner vorgesehene Computer nicht mehr so vorzufinden ist, wie es eigentlich sein sollte. Gelegentlich hat der Monteur auch die gerade benötigte Softwareversion nicht dabei, sodass zunächst die notwendige Steuerungssoftware zeitaufwändig beschafft werden muss, bevor an die eigentliche Wartung oder Reparatur der Notlichtbeleuchtungsanlage gegangen werden kann.

Die Steuerungseinheiten der Energieverteiler sind zwar mit Mikrokontrollern, jedoch mit möglichst kleinen und speicherarmen Mikrokontrollern, die häufig vergleichsweise langsam getaktet sind, ausgestattet. Vereinheitlichung der Software, insbesondere unter dem Blickwinkel der Fernwartbarkeit, stößt häufig an Kapazitätsgrenzen der Anlagen-Mikrokontroller. Es besteht also der Wunsch, bei Berücksichtigung von Vereinheitlichungsaspekten, eine Programmierbarkeit von Sicherheitsbeleuchtungsanlagen zu schaffen, die auch von Personen durchführbar ist, denen nicht alle Finessen einer Programmierhochsprache wie C geläufig sind.

Die englische Zusammenfassung der chinesischen Patentanmeldung CN 1 987 850 (Anmelderin: Tengxun Science and Technology; Anmeldetag: 20.12.2005) gibt dahingehend einen interessanten Hinweis, dass das AJAX-Protokoll auf dynamische Netze anwendbar sein kann. An dieser Stelle sei angemerkt, dass es sich bisher noch nicht etabliert hat, ob AJAX tatsächlich als ein Protokoll bezeichnet werden darf. Werden die einschlägigen Spezifikationen der entsprechenden Arbeitsgruppen zum AJAX-Protokoll konsultiert, so scheinen alle einschlägigen Fachleute vordergründig die Internet-Kommunikation zweier PCs im Blickfeld zu haben. Wie die Grundlage des AJAX-Protokolls anderweitig sinnvoll umgesetzt werden kann, lässt sich in den diversen Spezifikationen nicht finden.

Die erfindungsgemäße Aufgabe wird durch einen Energieverteiler einer Notlichtbeleuchtungsanlage nach Anspruch 1 gelöst. Ein geeignetes Kommunikationsverfahren zur Verwaltung und Steuerung einer erfindungsgemäßen Notlichtbeleuchtungsanlage lässt sich aus Anspruch 9 entnehmen. Vorteilhafte Weiterbildungen sind den abhängigen Ansprüchen zu entnehmen.

Die vorliegende Erfindung erfüllt daher die Anforderung nach einer zeitgemäßen, komfortablen, web-basierten Konfigurations-, Steuerungs- und Überwachungsmöglichkeit der Anlage, insbesondere der Sicherheitsbeleuchtungsanlage, die die oben genannten Einschränkungen aufhebt. Üblicherweise werden bei webbasierten Lösungen die Konfigurationsparameter in HTML-Formulare eingetragen und gleichzeitig als CGI-Parameter über das Http-Protokoll an einen Webserver geschickt. In einem konkreten, typischen Beispiel der Konfiguration eines Stromkreises mit 20 Leuchten (mittlere Größe einer Sicherheitsbeleuchtungsanlage) kommen in diesem Fall zusätzlich zu den Stromkreisparametem bei 20 Leuchten pro Stromkreis 20-fach die Parameter für Typ, Leuchtmittel, Position, Betriebsart, Gebäudeplan usw. zusammen. Der reservierte Speicherplatz für die Datenstruktur des Http-Headers, der die CGI-Parameter enthält, ist typischerweise zu klein bemessen, um eine derartige Datenmenge zu fassen, eine einzelne Konfiguration der Leuchten würde den Benutzer vor eine Geduldprobe stellen. Es ist also über die Verwendung eines Http-Protokolls hinaus ein zusätzlicher Weg gefunden worden, die Daten vom Browser an den Webserver in der Anlage zu übertragen. Zur Lösung trägt bei, dass die Übertragung als asynchrone Übertragung der einzelnen Konfigurationsparameter im Hintergrund läuft, während der Benutzer die Eingaben vornimmt. Ein weiteres, dynamischeres Beispiel für diesen Mechanismus ist die Konfiguration der visualisierten Überwachung der Testzustände von (ausgewählten) Beleuchtungsmitteln, wie Leuchten, bei der in Kombination mit einer "Drag-and-Drop"-Implementierung in Javascript die Leuchten wie Symbole auf der (Windows-)Arbeitsfläche auf den Gebäudeplänen positioniert werden, während die neuen Koordinaten im Hintergrund an die Anlage geschickt werden.

Die mit Mikrokontrollern ausgestatteten Energieverteiler sind häufig mit einer Zentral- oder Gruppenbatterieanlage aufgebaut. Die Energieverteiler können als Haupt- oder Unterverteiler für einen Netzabschnitt des Gebäudes aufgebaut werden. Die Sicherheitsbeleuchtungsanlage ist für den jeweiligen Netzabschnitt eine klassische Zwei- oder Drei-Draht-Energieversorgungseinrichtung, an die in Mischbetriebsweise Leuchten unterschiedlichen Typs, wie Dauerlichtleuchten und Bereitschaftslichtleuchten, angeschlossen sind. Insbesondere in Bürogebäuden, aber auch in anderen öffentlich zugänglichen Gebäuden, erfährt die Sicherheitsbeleuchtungsanlage über die Jahre eine permanente Veränderung, z. B. durch das Errichten, Umgestalten und Renovieren von Gebäudeabschnitten und Gebäudebereichen und der damit einhergehenden Veränderung der Flucht- und Notwege. Mit der Idee, jede einzelne Leuchte kann als dynamischer Knotenpunkt betrachtet werden, dessen Eigenschaften und Platzierung den jeweiligen Anforderungen und Veränderungen angepasst werden, lässt sich eine Webserver-basierte Abbildung des Gebäudes widerspiegeln. Der Webserver ist so rudimentär gestaltet, dass er auf kleinen, langsam getakteten Mikrokontrollem, z. B. mit einer 8-Bit-Busbreite, installierbar ist. Der Webserver hat wenigstens eine Schnittstelle, die nach dem Hypertext-Transfer-Protokoll (Http) arbeitet. Der Webserver dient zum Austausch von Anlagendaten der Sicherheitsbeleuchtungsanlage. Mit anderen Worten, wenig Siliziumfläche der Halbleiter wie Mikrokontroller reicht für die sichere Steuerung einer Sicherheitsbeleuchtungsanlage bei gleichzeitig hohem Bedien-, Überwachungs- und Eingriffskomfort.

Zu den Anlagendaten gehören Daten wie die Anzahl der Beleuchtungsmittel, der genaue Ort eines einzelnen Beleuchtungsmittels, insbesondere in Bezug auf das Gebäude, der Zustand des Beleuchtungsmittels, der Betriebszustand des Beleuchtungsmittels, die Art des Beleuchtungsmittels, die Ansteuerbarkeit eines Beleuchtungsmittels, der Lichtaussendemodus eines Beleuchtungsmittels und an welcher elektrischen Strecke das Beleuchtungsmittel hängt.

Der AJAX-Mechanismus (wobei AJAX für Asynchronous JavaScript and XML steht) ist ein Set von Web-Techniken oder Web-Technologien. Gelegentlich wird der AJAX-Mechanismus auch als AJAX-Protokoll bezeichnet. Einen zentralen Befehl stellt das XMLHttpRequest-Objekt dar, auf dem der Datenaustausch häufig basiert. Nähere Spezifikationen lassen sich beim World Wide Web Consortium finden. Das XMLHttpRequest-Objekt ist eine Schnittstelle (API), um skriptgesteuert HTTP-Client-Funktionen auszuführen, wie z. B. das Übermitteln von Formulardaten oder das Laden von Daten von einem Server. Es ist insbesondere im Browser implementiert, und es ist nachrangig im Webserver - häufig gar nicht. Die Daten können, müssen aber nicht im XML-Format vorliegen. Beim Laden von Daten kann XML oder HTML als Format genutzt werden. Vorrangig sind erfindungsgemäß die Kernkomponenten der AJAX-Technologie zu verwenden. XML spielt insbesondere beim Austausch von Daten mit Webservices eine Rolle.

Die Anlagendaten, die in wenigstens einem einem Mikrokontroller zugeordneten Speicher, insbesondere einem Flash-Speicher, eines Energieverteilers der Sicherheitsbeleuchtung gespeichert sind, werden auf Anforderung aus einem Browser, der auf einer zweiten Berechnungseinheit, wie einem PC oder einem Laptop, läuft, aus dem Webserver zur Verfügung gestellt. Der Webserver, der die Schnittstelle für das Hypertext Transfer Protocol bietet, arbeitet mit dem Satz Techniken, die sich unter dem Begriff AJAX zusammenfassen lassen. Das AJAX stellt die Verbindungsebene der Anlagendaten her. Das AJAX zeichnet sich durch seine kompakten, nur tatsächlich benötigten Daten, die nämlich dem Veränderungs- oder Betrachtungsprozess unterliegen, aus, die dynamisch anpassbar sind.

Auch gehören zu den Anlagendaten Positionsangaben zu einzelnen Beleuchtungsmitteln, wie Bereitschaftslichtleuchten und Dauerlichtleuchten. Die Positionsangaben sind für die Installationsanweisung während des Aufbaus wichtig. Die Zustandsangaben der Beleuchtungsmittel werden gespeichert, so dass der Energieverteiler unter Rückgriff auf eine Gleichspannungsquelle bei Netzspannungsausfall den Weiterbetrieb von zumindest einigen der Beleuchtungsmittel sicherstellen kann. So lässt sich über die Zustandsangabe bestimmen, welches Beleuchtungsmittel zu welchem Zeitpunkt angehen wird bzw. ob es schon eingeschaltet worden ist.

Die Anlagendaten werden über die Schnittstelle in einem asynchronen Modus auf Grund von externen Browseranforderungen in einer browserfähigen Form übermittelt. Während des ersten vollständigen Aufbaus der Seiten des Browsers muss die asynchrone Datenübertragung nicht vorliegen. Die asynchrone Datenübertragung kann nach einer Ausgestaltung ab der durchzuführenden Aktualisierung vorliegen. Die Anforderungen können aus Standard-Internet-Browsern stammen. Bei der Übermittlung der Daten vom Browser an den Server wird das browsereigene XMLHttpRequest-Objekt für die Übertragung genutzt. Das Zurverfügungstellen der Anlagendaten durch Javascript-Eventhandler ist derart initiierbar, dass die asynchrone Übertragung der Anlagendaten während Änderungen der Anlagendaten vorgenommen wird. Der (programmtechnische) Ablauf sieht so aus, dass die Javascript-Eventhandler Funktionen aufrufen können, die wiederum asynchrone Übertragungen der Anlagendaten an den Webserver durchführen. Verändert der Benutzer des Browsers in einem steuerbaren Modus, wie zum Beispiel einem Administratormodus, der ihn in die Lage versetzt, Anlagedaten verändern zu dürfen, durch einzelne Eingaben, wie zum Beispiel einem Mouse-Click, einer Tastatureingabe, einem Copy-und-Paste-Befehl, so werden die Daten nach jeder durchgeführten Aktion asynchron zwischen Browseroberfläche und den gespeicherten Daten des Mikrokontrollers abgeglichen. Selbst bei Systemabstürzen des Browserrechners sind die Anlagendaten immer auf dem aktuellen Stand.

Der Energieverteiler wechselt, insbesondere auf Grund von eingegebenen Passwörtern zwischen unterschiedlichen Zuständen, zumindest zwischen einem ersten und einem zweiten Zustand. Der erste Zustand ist ein Allgemeinnutzerzustand. Der zweite Zustand ist ein Administratorzustand. Der Webserver ist in einen Allgemeinnutzerzustand und in einen Administratorzustand einstellbar. Zur Bediensicherheit lassen sich die Anlagendaten über ein Hypertext Transfer Protocol nur im Administratorzustand verändern, während im Allgemeinnutzerzustand die Anlagendaten nur in ihrem Umfang beschränkt lesefähig sind.

Der Energieverteiler verändert die Speicherverwaltung über seinen Mikrokontroller. Mit Eintritt in den Administratorzustand ist ein Speicherbereich für den Mikrokontroller dynamisch für Anlagendaten so alloziert, dass die gewünschten Anlagendaten als Anlagendatensatz in wenigstens einem HTML-Formular vorliegen. Auf Bedarf hin werden Datenbereiche speichermäßig alloziert bzw. zugeordnet und reserviert. Der Anlagendatensatz wird in Abhängigkeit von über das Hypertext Transfer Protocol übertragenen Informationen, insbesondere in Form von CGI-Parametersätzen, dynamisch angepasst, angestoßen durch Javascript-Events. Dabei wird der allozierte Speicherbereich dem erforderlichen Speicherplatz für eine temporäre Datenstruktur zur Veränderung wenigstens eines Anlagendatensatzes angepasst.

Der Energieverteiler kann gleichzeitig als Datensammelstelle dienen. Es können mehrere Energieverteiler oder auch andere, elektronisch gesteuerte Gebäudeautomatisierungssysteme über die erfindungsgemäße Schnittstelle Anlagendaten von sich und den übrigen Systemen übertragen. Somit wird von wenigstens einem Energieverteiler über die Schnittstelle ein Datensatz zur Verfügung gestellt. Statt CGI-Datensätze zu übertragen ist es in dem Fall eher vorteilhafter, XML-codierte Daten an eine, insbesondere delozierte, in der Ferne angeordnete Berechnungseinheit, insbesondere auf Anforderung der Berechnungseinheit, zu übertragen.

Zum Langzeiterhalt der Anlagendaten ist wenigstens ein Flashspeicher vorgesehen. Die Daten werden in Filesystemen abgelegt. Bevorzugt werden sie in einem einzigen Filesystem abgelegt. In einem Flashfilesystem sind sowohl Daten von wenigstens einer Konfigurationsdatei als auch graphische Gebäudepläne permanent ablegbar. Somit hat der hinter dem Webserver angeordnete Mikrokontrollerbereich wenigstens zwei trennbare files im Filesystem. Weil die Gebäude selbst in der Regel mit deutlich weniger Änderungen die Zeit überdauern, als im gleichen Zeitraum die Anlagedaten angepasst werden, ist es durch diese Trennung der Daten nicht nötig, immer sämtliche Daten zu erneuern. Das Datenmodell trägt zur Lebensdauer des Flashspeichers bei, der nur eine gewisse Anzahl, z. B. 10000 Schreibzyklen, überdauern kann.

Parallel zu den Anlagendaten ist für den Mikrokontroller ein Graphikspeicherbereich reserviert. Die Graphikdaten werden bevorzugt im selben Filesystem abgelegt. In dem Graphikspeicherbereich sind graphische Gebäudepläne, insbesondere über ein File Transfer Protocol, ablegbar. Als besonders geeignet haben sich Datenformate für die Graphikdaten erwiesen, die sehr komprimiert, ggf. unter Reduktion der Farbtiefen, Bilder verwalten können. Solche Datenformate sind GIF-Files, PNG-Files und ähnliche Formate.

Auf den bisher beschriebenen Energieverteilern kann der eine Teil eines Verwaltungs- und Steuerungsverfahrens im Rahmen von einer Steuersoftware aufgespielt sein. Das Steuerverfahren arbeitet mit einem Browser zusammen, der auf einer zweiten Berechnungseinheit, neben der ersten Berechnungseinheit des Mikrokontrollers, läuft. Das Verwaltungs- und Steuerungsverfahren einer Sicherheitsbeleuchtungsanlage, die für den Mischbetrieb eines leitungsgebundenen Beleuchtungsmittelstrangs bestimmt ist, hat also wenigstens zwei Berechnungseinheiten, die kommunikativ miteinander zu verbinden sind. Auf der ersten Berechnungseinheit, die in der Regel ein Mikrokontroller ist, läuft ein Webserver, der über ein Hypertext Transfer Protocol an die zweite computertypische Berechnungseinheit angebunden ist. Computertypische Berechnungseinheiten sind mathematisch leistungsstärker als die erste Berechnungseinheit. Über ein Asynchronous JavaScript and XML-Protocol werden Anlagendaten der Sicherheitsbeleuchtungsanlage zwischen erster und zweiter Berechnungseinheit ausgetauscht. Mit üblichen Browsern kann die Sicherheitsbeleuchtungsanlage betrachtet, gesteuert, eingestellt und angepasst werden. Der Monteur muss sich und sein Überwachungsgerät nicht mehr mit einer gesonderten Software für jeden einzelnen Energieverteiler ausstatten.

Auf der zweiten Berechnungseinheit, die insbesondere über eine Fernverbindung an die erste Berechnungseinheit angebunden ist, läuft ein Browser bzw. ein gängiger Webbrowser. Eine Fernverbindung kann zum Beispiel eine Kommunikationssteuerungsschicht umfassen. Der Browser, der sich dynamisch anpassende Datensätze aus Anlagendaten auf einem aus der ersten Berechnungseinheit beziehbaren Hintergrund, der wenigstens ausschnittsweise ein Gebäude, d. h. einen Gebäudeplan, der Sicherheitsbeleuchtungsanlage darstellt, abbildet, schafft so eine gute optische Wiedergabe der Sicherheitsbeleuchtungsanlage, die auch intuitiv bedienbar ist. Einzelne Datensätze stellen den Status von Beleuchtungskörpern eines Beleuchtungsstrangs graphisch dar. Mit einem Blick kann die gesamte Anlage oder alternativ ein Anlagenbereich erfasst werden. Durch die Asynchrone Kommunikation sind die Browserwiedergaben immer auf dem aktuellen Stand, selbst in sicherheitskritischen Situationen sorgt das Übertragungsverfahren für eine zuverlässige Systemsteuerung, z. B. im Notfall, wenn besondere Ausleuchtungszustände erwünscht sind. Nach einer Ausgestaltung werden bei der Anzeige der Gebäudeübersicht bzw. eines gesamten Gebäudeplans die Daten nicht asynchron übertragen, obwohl es ebenfalls möglich ist, sondern die Seite wird periodisch neu aufgebaut. Hierbei werden als Testdaten aufgerufene Daten ausgewertet. Es werden bevorzugt die letzten Testdaten ausgewertet, vorausgesetzt, es hat ein Test vorher stattgefunden, mit dem der Zustand der Beleuchtungsmittel erhoben worden ist.

Weil über das Hypertext Transfer Protocol nur zu verändernde Daten übertragen werden, die nach einem Veränderungsvorgang automatisch für eine Speicherung aus dem Webserver in einen Speicherbereich für die Anlagendaten in der ersten Berechnungseinheit abgelegt werden, wird die Datenmenge auf dem Kommunikationsbus klein gehalten. Anschließend lassen sich die Daten per gesonderten Speicherbefehl in den Flashspeicherbereich umkopieren und so schreiben.

Nach einer Ausgestaltung ist der Browser die anfordernde Instanz für die asynchrone Datenübertragung.

Nach einer Ausgestaltung ist die dynamische Speicherallozierung im Mikrokontroller für Anlagenparameter vorzusehen. Nach einer alternativen Ausgestaltung können auch webbasierte Darstellungsweisen, wie HTML-Formulare in dynamisch allozierbaren Speichern, vorgehalten werden. Besonders speicherarm ist die Ausgestaltung, bei der statische Speicherbereiche für typische Datenstrukturen vorhanden sind.

Nach einem Aspekt zeichnet sich die vorliegende Erfindung durch die einfachere Bedienbarkeit gegenüber bisher üblichen Wartungssoftwaren von Sicherheitsbeleuchtungsanlagen aus. Nach einem weiteren Aspekt basiert die vorliegende Erfindung auf der Erkenntnis, dass Anlagendaten und einzelne Datensätze aus den Anlagendaten bei Sicherheitsbeleuchtungsanlagen nur in einem so geringen Maße geändert werden, dass durch eine asynchrone Datenanforderung aus einem universellen Webbrowser ausreichend schnell eine überblicksmäßige Wiedergabe des gesamten Sicherheitsbeleuchtungssystems, insbesondere eingebunden in seine tatsächliche räumliche Gestaltung und Anordnung, möglich ist.

Es wird keine spezielle Plattform und keine Programminstallation außer einem üblichen Browser (MS Internet Explorer, Firefox, ...) auf dem für die Konfiguration vorgesehenen Berechnungseinheit vorausgesetzt. Insbesondere müssen auch keine Java-Applets oder sonstige Browser-Erweiterungen nachgeladen oder manuell installiert werden. Die Übermittelung der Daten zwischen Browser und Anlage (bzw. dem Webserver als Eingangstor) im Hintergrund (asynchron) ermöglicht komplexere Konfigurationsmöglichkeiten ohne lange Verzögerungszeiten zwischen den Aktionen. In Kombination mit einer im Browser lauffähigen "Drag-and-Drop"-Implementierung (in Javascript) ist das Verhalten, z. B. der Visualisierungskomponenten, bei der Konfiguration dem gewohnten Verhalten von grafischen Oberflächen (z. B. einer typischen Windows-Arbeitsfläche) sehr ähnlich.

Durch die erfindungsgemäße Lösung ist es ohne die Installation spezieller Software möglich, komplexe Konfigurationen mit vielen Parametern (wie z. B. die Konfiguration eines einzelnen Endstromkreises mit allen Leuchten) ohne Verzögerung durch einen Neuaufbau der Seite im Browser vorzunehmen. Weiterhin können die Leuchtensymbole per "Drag-and-Drop"-Funktionen, wie sie auf nahezu allen grafischen Betriebssystemoberflächen zu finden sind, auf Gebäudepläne (in gebräuchlichen Grafikformaten, über FTP übertragbar) positioniert werden, und die Testzustände der Leuchten anschließend auf deren Position in den entsprechenden Plänen angezeigt werden. Weitere Vorteile sind darin zu sehen, dass
- die Anlage von mehreren Berechnungseinheiten aus überwacht und schnell und komfortabel konfiguriert werden kann, ohne eine Programminstallation auf jeder Berechnungseinheit notwendig zu machen,
- die für die Überwachung eingesetzte Berechnungseinheit weder von einer speziellen Plattform noch von einer speziellen Betriebssystemversion abhängig ist, noch muss sich die überwachende Berechnungseinheit an einem bestimmten Ort befinden (hierzu trägt die Verwendung der gängigen Internetprotokolle HTTP und FTP bei),
- die intuitive Bedienung bei der Konfiguration wie von gängigen grafischen Betriebssystemen im gewohnten Umfang möglich ist,
- bestehende Probleme bei der Übertragung von vielen Parametern (wie z. B. bei der Konfiguration eines ganzen Endstromkreises notwendig) an einen Webserver mit reduzierter Funktionalität umgangen werden können.

Das Konzept für die Browser-basierte Konfiguration und Steuerung einer Sicherheitsbeleuchtungsanlagen bzw. Notbeleuchtungsanlage über die asynchrone Übertragung der Konfigurationsparameter an die Anlage umfasst die folgenden Bestandteile:
Bei Aufruf einer Seite aus dem Administrationsbereich wird in der Anlage temporär ein Speicherbereich für die entsprechende Datenstruktur des Konfigurationsobjektes (Anlage, Stromkreis usw.) reserviert und mit der aktuellen Konfiguration gefüllt (Speicherallozierung). Wird diese Konfigurationsseite von einem Programm dynamisch erzeugt, so werden die aktuellen Konfigurationsdaten im generierten HTML-Formular voreingestellt.
Durch Javascript-Eventhandler (onchange, onclick usw.) lösen die Eingaben des Benutzers in den üblichen HTML-Formularelementen (Textfelder, Auswahllisten, Knöpfe usw.) Funktionen aus, die die Eingabedaten in Form von CGI-Parametem asynchron über das XMLHttpRequest-Objekt an ein CGI-Programm übermitteln, das die Konfigurationsparameter aus dem Http-Header ausparst und in den entsprechenden reservierten Speicherbereich übernimmt. Dadurch wird im Hintergrund ohne einen Neuaufbau der Seite (Website) der temporäre Speicherbereich sukzessive mit der gewünschten Konfiguration belegt.

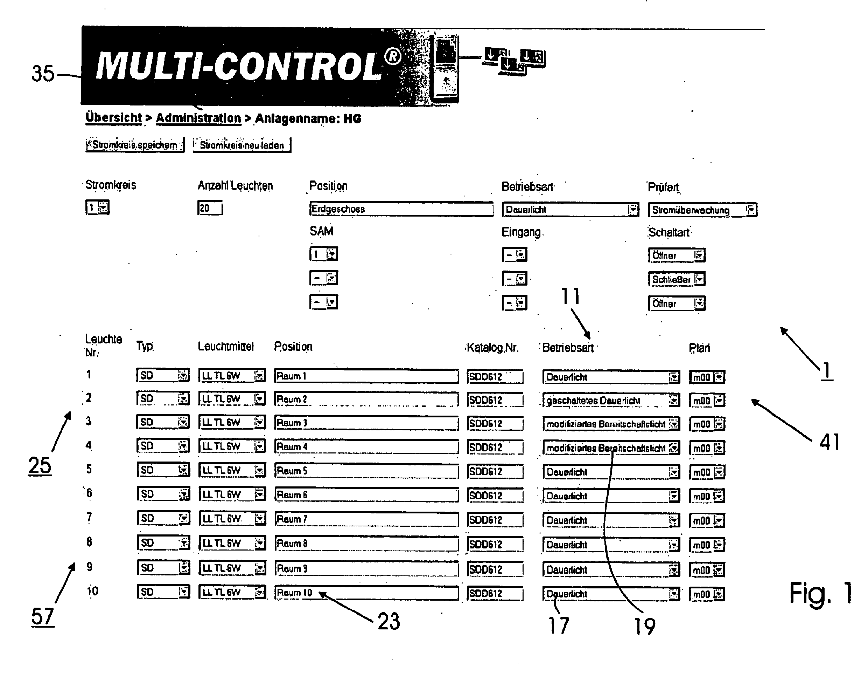

Zum leichteren Verständnis soll ein Code-Beispiel erläutert werden:
Es wird in nachvollziehbarer Weise der Weg eines 42 Zeichen langen Konfigurationsparameters "Position" einer ersten Leuchte eines ersten Stromkreises einer ersten Anlage vom Browser in die Anlage, insbesondere in den Webserver des Energieverteilers, (siehe Figur 1) dargestellt.

Zunächst wird eine Administrationsseite aus der aktuellen Konfiguration generiert, der erzeugte Quellcode enthält u. a. folgende Zeilen: 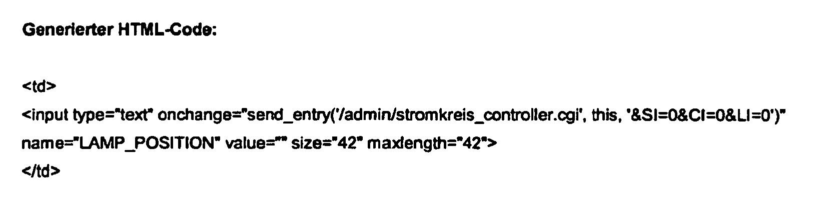 Hierbei gilt: Si = System Index, CI = Circuit Index, Li = Lamp Index

Wird das entsprechende Eingabefeld verändert, wird die Javascript-Funktion send_entry() aufgerufen, die den eingegebenen Wert für "LAMP_POSITION" und die Identifikationsdaten der Leuchte an das CGI-Programm /admin/stromkreis_controller.cgi schickt.

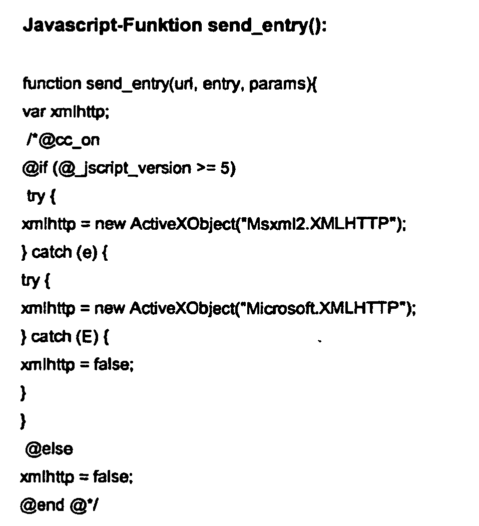

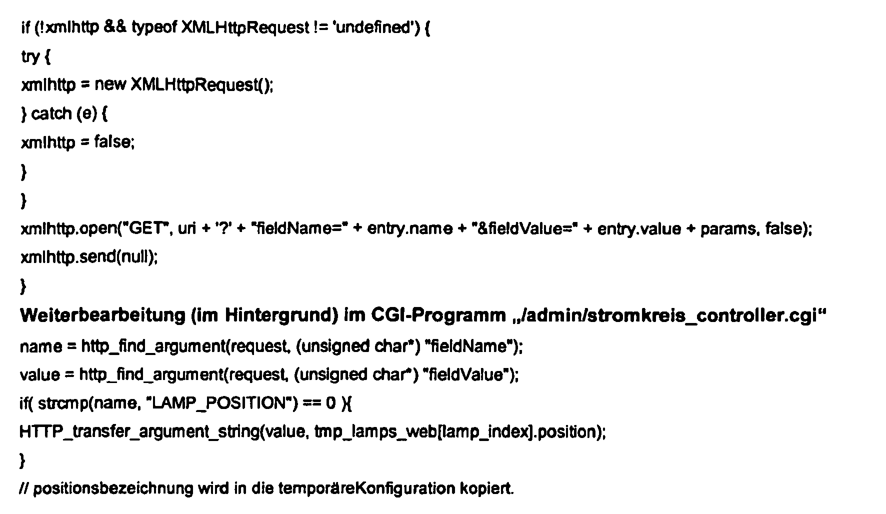

Durch den gleichen Mechanismus wird auf einen Knopfdruck im Webbrowserformular ein Kommando zum Abspeichern geschickt und die temporäre Konfiguration wird in der Anlage übernommen und abgespeichert. Ein Vorteil dieser Methode liegt darin, dass auch bei umfangreichen Konfigurationsseiten nicht alle Parameter gleichzeitig übertragen werden müssen, selbst wenn nur einer geändert werden soll.

Insbesondere wird durch die erfindungsgemäße Lösung das Problem umgangen, dass auf einer als für die Verwendung geeigneter Berechnungseinheit (Zilog Microcontroller eZ80Acclaim! / Zilog ZTP TCP/IP Stack) der Webserver typischerweise nur sehr wenig Speicherplatz für die CGI-Parameter in der Datenstruktur für den Http-Header bereitstellt. Als Alternative kann auch ein Mikrokontroller des Typs PIC mit entsprechenden Peripheriebausteinen für seine Ethemetanbindung verwendet werden. Atmel-Mikrokontroller sind ebenfalls verwendbar. Eine gleichzeitige Übertragung aller Konfigurationsdaten, z. B. eines Stromkreises mit allen Leuchten, Schaltarten, Bezeichnungen und Positionsangaben usw., an den Energieverteiler bzw. an die Anlage in einem Webformular auf herkömmlichen Wege ohne die sukzessive Übertragung der Daten im Hintergrund wäre bei den üblichen Mikrokontrollern (ohne einen speziell modifizierten Webserver) nicht möglich. Weil insbesondere die Seite im Browser nicht - wie sonst bei der Verwendung eines Webformulars üblich - neu aufgebaut werden muss, nähert sich durch die asynchrone Übertragung ("im Hintergrund") das Verhalten der Webanwendung dem Verhalten einer herkömmlichen Anwendung an, die auf einem PC lokal läuft.

Das Bedienungskonzept für die visualisierte Überwachung für Testzustände der Leuchten beruht ebenso auf diesem Mechanismus:

Ein Spezialfall ist die Übertragung der Positions- und Identifikationsdaten bei der Konfiguration der visualisierten Überwachung von Testergebnissen der Leuchten. Bei der Positionierung der Leuchtensymbole auf den Gebäudeplänen werden die Symbole über eine Implementierung von "Drag-and-Drop"-Funktionen in Javascript belegt. Wie bei HTML-Formularen wird die Übertragung der Koordinaten und sonstigen Parameter über das XMLHttpRequest-Objekt an das Controller-CGI-Programm zum Abschluss einer Symbolbewegung durch einen Javascript-Eventhandler (document.onmouseup) ausgelöst.

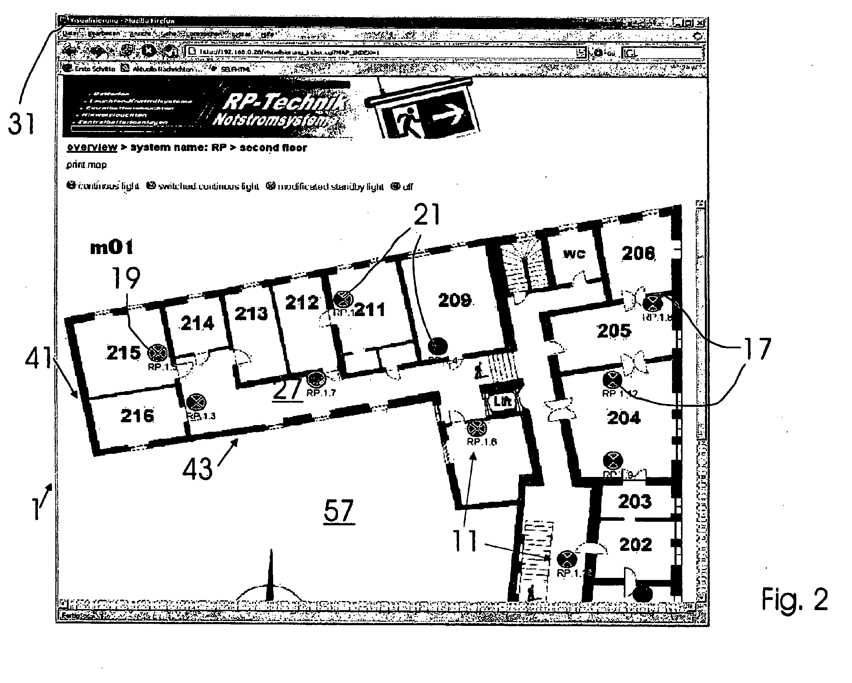

Der Ablauf der Konfiguration der Visualisierungskomponente kann beispielhaft beschrieben werden.
Anfänglich werden Gebäudepläne von einer Berechnungseinheit bzw. einem Rechner übertragen und auf dem Energieverteiler abgespeichert. Die Gebäudepläne, die auch als Karten zu bezeichnen sind, können in allen im jeweiligen Browser darstellbaren Grafikformaten über das File-Transfer-Protocol auf den Energieverteiler aufgespielt werden. Und sie werden unter Benutzung eines Namensschemas von dem Energieverteiler als Gebäudepläne erkannt.
Die Zuordnung eines Leuchten-Plans erfolgt zum Beispiel dadurch, dass auf der Administrationsseite für die Endstromkreise über ein Auswahlmenü zu jeder Leuchte der richtige Gebäudeplan ausgewählt werden kann, auf dem die jeweilige Leuchte angezeigt wird.
Danach lassen sich die Leuchten auf einem Gebäudeplan anzeigen. Eine dynamisch aus der Anlagenkonfiguration generierte Seite zeigt im Hintergrund den ausgewählten Gebäudeplan an. Darüber, d. h. im Vordergrund, werden die vom Typ und Testzustand abhängigen Symbole der Leuchte gemäß ihrer gespeicherten Koordinaten angezeigt. Beispielhaft kann eine fehlerhafte Leuchte mit einem roten Symbol, eine einwandfrei getestete mit einem grünen oder gelben Symbol angezeigt werden. Zusätzlich zu diesem Farbcode werden Dauerleuchten durch ein anderes Symbol angezeigt als Bereitschaftsleuchten usw. (siehe Figur 2).

Der Energieverteiler speichert auf seinem internen Speicher zu jeder Lampe unter anderem die Information ab, auf welchem Gebäudeplan sein Leuchtensymbol zu finden sein soll, sowie die Koordinaten seiner Position. Soll ein Plan mit Leuchtensymbolen angezeigt werden, so wird über ein CGI-Programm die HTML-Seite generiert, die als Bild im Hintergrund den entsprechenden Gebäudeplan hat. Für jede Leuchte, die auf dem Gebäudeplan erscheinen soll, wird ein HTML-DIV-Bereich erzeugt, der die Konfiguration innerhalb der Anlage und die Position als Attribute enthält. Die endgültige Positionierung erfolgt dann über das Auswerten der Attribute durch eine Javascript-Funktion, die die Koordinaten noch gemäß der gewählten Vergrößerungsstufe der Karte skaliert. Symbole und Karte können in verschiedenen Stufen sowohl separat als auch gemeinsam skaliert werden. Zusätzlich wird das Symbol entsprechend der Konfiguration und des gespeicherten Testergebnisses gewählt.
Die Positionierung der Leuchtensymbole kann analog zum Positionieren von Symbolen auf der Windows-Arbeitsfläche durchgeführt werden. Die Symbole für die Leuchten werden durch über das auf der zweiten Berechnungseinheit vorhandene Eingabegerät (Maus, Trackball, Touchscreen, usw.) in einem Fenster des Browsers selektiert und positioniert. Die Funktionsweise ist analog dem Verschieben von Symbolen auf einer Windows-Arbeitsfläche. So kann die Maus als Eingabegerät genutzt werden. Die Leuchtensymbole werden durch Anklicken mit der linken Maustaste selektiert und durch Mausbewegungen bei heruntergedrückter Maustaste an die gewünschte Position auf dem Gebäudeplan im Browserfenster bewegt. Wird die Maustaste losgelassen, so wird eine Javascript-Funktion ausgelöst, die asynchron (d. h. im Hintergrund ohne einen Neuaufbau der Seite im Browser; benutzt wird hierzu die XMLHttpRequest-API) die Identifikation der Leuchte (Stromkreis und Leuchtenindex) sowie die Koordinaten auf dem Plan an den Webserver überträgt, der seine Konfigurationsdateien aktualisiert und abspeichert.

Das vorgestellte Verfahren bietet zahlreiche Anwendungsmöglichkeiten, zum Beispiel kann das Verfahren dazu verwendet werden, die Konfiguration und Steuerung von Sicherheitsbeleuchtungsanlagen durchzuführen. Auch kann das Verfahren dazu verwendet werden, die Visualisierung der Testzustände von Sicherheitsbeleuchtungsanlagen durchzuführen.

Die vorliegende Erfindung kann noch leichter verstanden werden, wenn Bezug auf die beiliegenden Figuren genommen wird, wobei
Figur 1 ein mögliches Webformular zeigt,
Figur 2 einen möglichen Gebäudeplan zeigt,
Figur 3 ein geeignetes Ablaufdiagramm zwischen Webserver und Browser zeigt,
Figur 4 eine geeignete Hardwareanordnung zeigt und
Figur 5 einen Prinzipelektroplan einer Sicherheitsbeleuchtungsanlage als Teil einer Gebäudeinstallation zeigt.

Figur 1 offenbart eine graphische Wiedergabe eines Webformulars 57, das sich im Rahmen eines Wiedererkennungseffekts für den Nutzer noch sehr stark an der Oberfläche eines üblichen, bisher weit verbreiteten Konfigurations- und Einstellwerkzeuges orientiert. Das Webformular 57 ist zu sehen, wenn der Webbrowser in den Administratorzustand 35 schalten konnte. In einer alternativen Gestaltung kann das Webformular 57 immer von einem Nutzer an einem Webbrowser gesehen werden, jedoch lässt sich eine Veränderung von Anlagendaten 25 nur im Administratorzustand 35 in der ersten Berechnungseinheit permanent speichern. Der Hintergrund 41, der einen tabellarischen Rahmen offeriert, wird durch die Anlagendaten 25 gefüllt. Die Anlagendaten 25 beschreiben die Sicherheitsbeleuchtungsanlage 1 in ihrem aktuellen Zustand. Die Darstellung in Figur 1 ist tabellarisch dominiert mit wenigen Graphik- und Textelementen. An ein und dem gleichen Beleuchtungsstrang sind Dauerlichtleuchten 17 und Bereitschaftslichtleuchten 19, sowie modifiziertes Bereitschaftslicht und weitere Beleuchtungskategorien angeschlossen. Aus der Tabelle der Figur 1 können auch die Positionsangaben 23 entnommen werden, die dann in einen Gebäudeplan 43 gespeichert oder auf diesem abgebildet werden können (Figur 2). An Hand der Betriebsart mit Dauerlichtleuchten 17 und Bereitschaftslichtleuchten 19 ist von einem Mischbetrieb 11 zu reden.

Figur 2 zeigt den aus dem Graphikspeicherbereich der ersten Berechnungseinheit geholten Gebäudeplan 43, der im Hintergrund 41, innerhalb des Webformulars 57, dazu dient, den Anlagenzustand 27 im Webbrowser 31 leicht bedienbar und steuerbar darzustellen. Die unterschiedlichen Beleuchtungskörper, wie Dauerlichtleuchten 17, Bereitschaftslichtleuchten 19 und weitere besondere Leuchten, werden im Mischbetrieb 11 betrieben und auch dargestellt. Somit ist durch punktuellen Eingriff, insbesondere auf jeden einzelnen Beleuchtungskörper, die gesamte Sicherheitsbeleuchtungsanlage 1 zügig und zuverlässig anpassbar, bedienbar und einstellbar. Der Gebäudeplan 43 kann als GIF-Datei vorliegen. Die Symbole für die einzelnen Beleuchtungskörper werden als CGI-Parameter an den Webbrowser 31 übertragen. Das im Vergleich zur Steuerungsanpassungsfrequenz der Beleuchtungskörper längerlebige Gebäude wird somit nur einmal beim ersten Webbrowseraufbau pro Sitzung transferiert und braucht danach nicht mehr den Kommunikationsbus belasten. Wird das Gebäude umgebaut, so braucht ebenfalls nur einmal das in einem kompakten Datenformat vorliegende aktuelle Abbild des Gebäudes auf den Webserver transferiert zu werden. Wie in Figur 2 zu sehen ist, kann ein nicht funktionierender Beleuchtungskörper sofort gesichtet werden. Mit der erfindungsgemäßen Software lässt sich ein zentral angeordneter Überwachungsraum für ein oder mehrere Gebäude einrichten, von dem aus alle Beleuchtungsmittel kontrolliert und ggf. ausgetauscht werden können, d. h., der Zustand bzw. der Status 21 von Beleuchtungskörpern überwachbar ist, ohne dass ein Elektriker permanent alle Gebäudeteile regelmäßig abgehen muss.

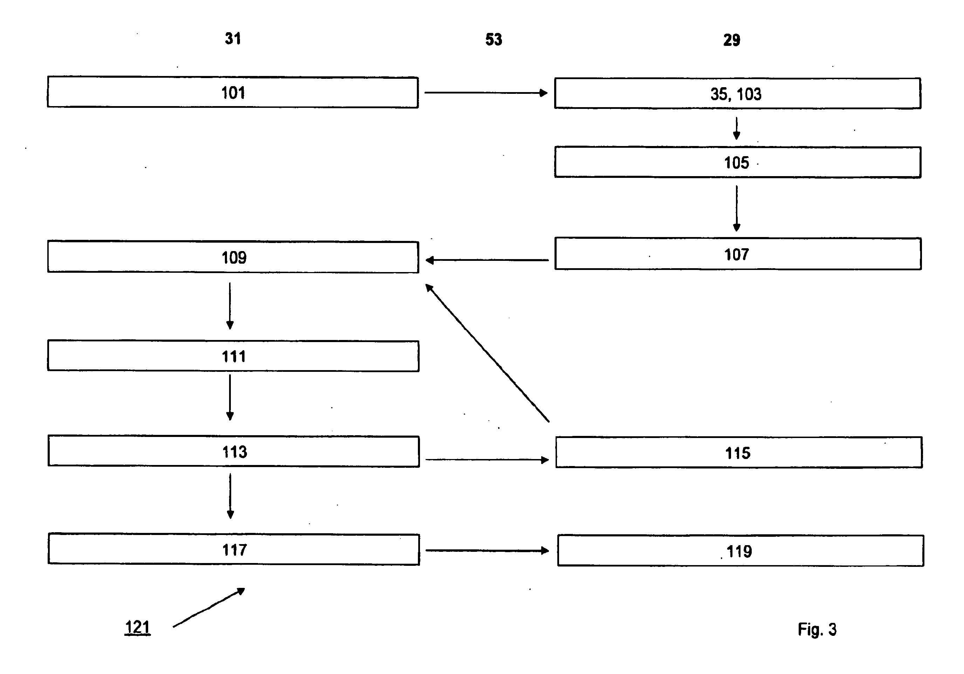

Figur 3 beschreibt in einem Blockdiagramm 121 eine typische Kommunikation zwischen einem Webbrowser 31 und einem Webserver 29 nach dem erfindungsgemäßen Verfahren über einen Kommunikationsbus 53, der vorzugsweise ein Ethernetbus ist. Durch die Pfeile wird die Ablaufrichtung bzw. die Kommunikationsrichtung angegeben. Von dem Webbrowser 31 wird der Administratorseitenaufruf 101 initiiert, indem ein entsprechendes Passwort und sonstige Umschaltbefehlsketten über den Kommunikationsbus 53 zum Webserver 29 übertragen werden. Der Webserver 29 akzeptiert den Administratorseitenaufruf 101 und schaltet von dem zuvor (nicht in Figur 3 dargestellten) Allgemeinnutzerzustand 33 in den Administratorzustand 35. Ist der Administratorzustand 35 durch den Webserver 29 eingenommen, so wird anfänglich ein ausreichender Arbeitsspeicher in dem Schritt der Arbeitsspeicherallokation 103 in dem Mikrokontroller bzw. seinem externen Speicher alloziert. In dem Schritt der Konfigurationskopie 105 wird die Konfiguration aus dem permanenten Speicher in den Arbeitsspeicher umgeladen bzw. kopiert. Sie steht für eine Veränderung zur Verfügung. Aus den Anlagendaten kann im Schritt 107, der HTML-Formulargenerierung, einer oder mehrere Datensätze zusammengestellt werden, um auf dem Webbrowser 31 ein veränderbares HTML-Formular anzuzeigen. Nun darf der Nutzer in der Konfigurationsanpassung 109 einen oder mehrere ausgewählte Datensätze bzw. Konfigurationsparameter, wie Beleuchtungsmittelposition, Beleuchtungsmittelzustand usw. anpassen und verändern. Im Rahmen von ausgewählten zu akzeptierenden Ereignissen, wie zum Beispiel onmouseclick, onchange, onbutton etc., wird das hinterlegte Ereignis aufgerufen. So kann ein Symbol für ein Beleuchtungsmittel, egal ob zum Beispiel Dauerlichtleuchte oder Bereitschaftslichtleuchte, neu positioniert werden bzw. ein Beleuchtungsmitteltest gestartet werden. Nach Abschluss des Ereignisses 111 wird eine CGI-Übertragung 113 gestartet, um die Daten des geänderten Datensatzes als CGI-Parameter asynchron zu dem Webserver 29 über den Kommunikationsbus 53 zu schicken. Auf dem Webserver 29 wird in dem Parsing-Schritt 115 der empfangene CGI-Parameter ausgeparst und in den temporär allozierten Arbeitsspeicher übernommen. Falls der Nutzer, zum Beispiel ein Elektroinstallateur, weitere Anlagendaten ändern möchte, werden neue Ereignisse nach Schritt 111 ausgelöst. Es findet ein asynchroner Abgleich zwischen Webbrowser 31 und Webserver 29 permanent im Hintergrund ereignisgesteuert statt. Sollte der Nutzer beschließen, dass die Änderungen aus den Schritten 109, 111, 113, 115 permanent erhalten bleiben sollen, so kann eine Konfigurationsbestätigung 117, z. B. durch die Bedienung eines gesonderten Knopfes auf dem Webformular im Webbrowser 31, an den Webserver 29 gesendet werden und die ausgeparsten Daten des temporären Arbeitsspeichers werden in dem permanenten Arbeitsspeicher, z. B. einem Flashspeicher, durch die Herstellung einer residenten Kopie 119 übernommen.

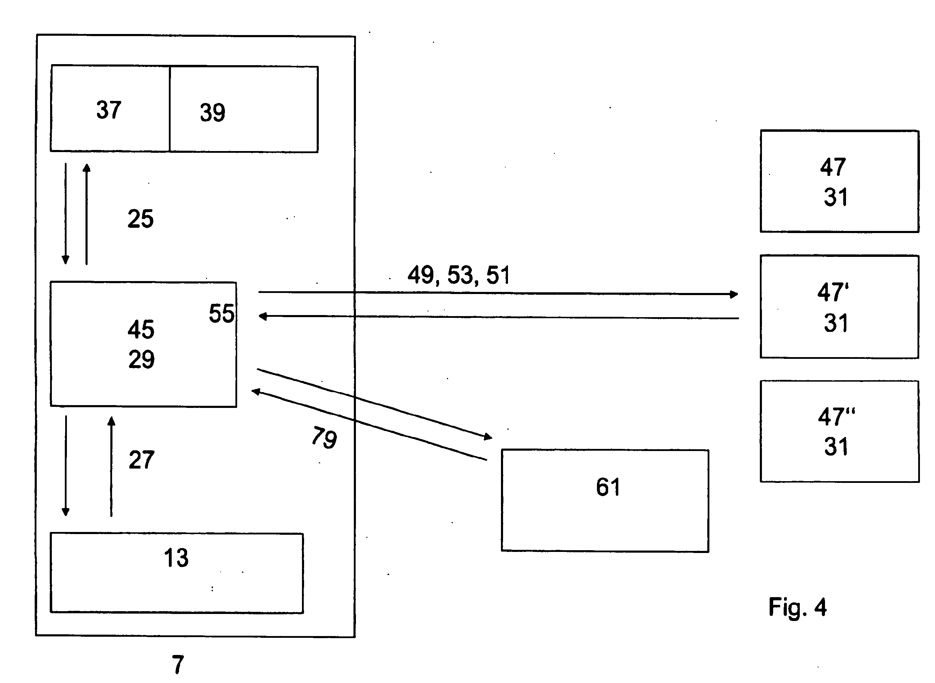

Figur 4 zeigt schematisch die Hardwareanbindung zwischen der Gruppenbatterieanlage 7, die natürlich auch eine Zentralbatterieanlage sein kann, und einem oder mehrerer Berechnungseinheiten 47, 47', 47" wie PCs. Auf den Berechnungseinheiten 47, 47', 47" laufen übliche Webbrowser 31. Statt Webbrowser können auch andere Programme, z. B. Building-Management-Systeme, die über OPC auf XML-Daten zugreifen, auf einer Berechnungseinheit 47 laufen. Die Berechungseinheiten 47, 47', 47", die deloziert über eine Fernverbindung 49 an der Gruppenbatterieanlage 7 angeschlossen sein können, können über die Schnittstelle 55 eine Verbindung mit der ersten Berechnungseinheit 45 aufnehmen. Die Schnittstelle 55 ist Teil der Berechnungseinheit 45. Auf der Berechnungseinheit 45, die ein Mikrokontroller mit Peripherie wie den dargestellten externen Speichern 37, 39 sein kann, läuft ein Webserver 29. Der Mikrokontroller ist so gestaltet, dass er Endstromkreise 13 und sonstige elektronische Baugruppen überwachen kann und den Anlagenzustand 27 aufzeichnen, bearbeiten und verändern kann. Die sich aus dem Anlagenzustand 27 ergebenden Anlagendaten 25 werden in die Speicher 37, 39 geschrieben und aus den Speichern 37, 39 ausgelesen. Die Fernverbindung 49 ist ein Kommunikationsbus 53, über den Datensätze 51, z. B. in Form von CGI-Datenparametern, asynchron übertragen werden können. Die Speicher 37, 39, von denen ein Speicher 39 ein Graphikspeicher ist, können - so wie graphisch dargestellt - unterschiedlich groß sein. Sie lassen sich auch den Anforderungen entsprechend, die sich aus den Datenumfängen, insbesondere zum und von dem Webbrowser 31, ergeben, dynamisch allozieren. Die Speicher können auch Teil des Mikrokontrollers als interne Speicher sein. Die Gruppenbatterieanlage 7 umfasst somit Elektronik, wie Mikrokontroller, Berechnungseinheiten 45, wenigstens einen Webserver 29, Speicher 37, 39 und Endstromkreise 13 wie elektrische Baugruppen. Ein weiterer Teil ist die Batterieanlage 61, die über eine Steuerung 79 mit Hilfe von einer Ladelektronik zu- und wegschaltbar bzw. in einen Ladezustand versetzbar ist. Als sehr gut verwendbaren Kommunikationsbus 53 hat sich ein auf einer TCP/IP-Schicht basierender Ethernet-Anschluss zur Übertragung eines Http-Protokolls mit eingebetteten Javascript bzw. AJAX erwiesen. Kleine CGI-Parameterpakete bilden Datensätze 51.

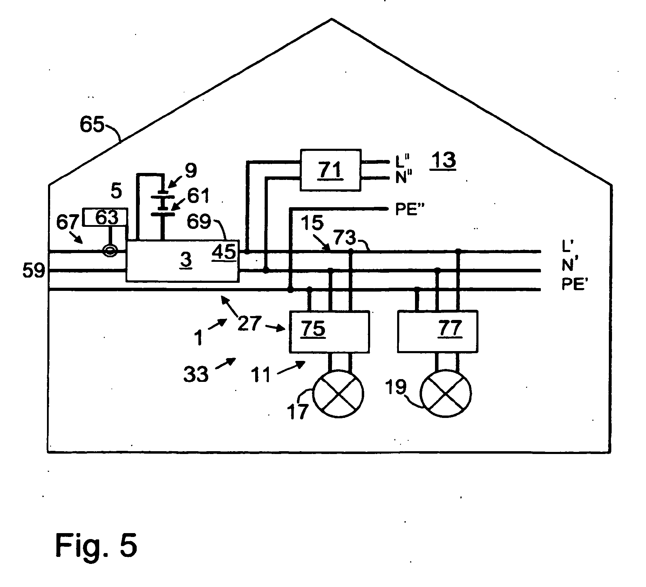

Figur 5 zeigt einen Elektroplan einer Gebäudeinstallation 67 in Prinzipdarstellung, in der das erfindungsgemäße Kommunikationsverfahren zur Steuerung, Überwachung, Wartung, Regelung und Kontrolle von Beleuchtungsmitteln im Mischbetrieb 11 genutzt werden kann. Teil der Gebäudeinstallation 67 sind die ersten, 45, und zweiten (in Figur 5 nicht dargestellten) Berechnungseinheiten. Die Gebäudeinstallation 67 eines Gebäudes 65 hängt in der Regel elektrisch an einem zentralen Versorgungsnetz 59, z. B. eines Energieversorgers. Trotz hoher Versorgungssicherheit müssen Zustände abgefangen werden, weil die Versorgungsspannung des Versorgungsnetzes 59, zumindest in einem Beleuchtungsstrang 15, zusammenbrechen kann. Zur Spannungsüberwachung sind an geeigneten Stellen innerhalb der Gebäudeinstallation 67 Spannungswächter 63 vorgesehen. Bei Spannungsunterschreitung eines Grenzwertes kann zusätzliche Energie aus einer Zentralbatterieanlage 5 in einen Energieverteiler 3 eingespeist werden. Der Energieverteiler 3 kann sowohl ein Hauptverteiler 69 als auch ein Unterverteiler 71 sein. Zur energetischen Versorgungssicherheit ist irgendwo in oder an dem Gebäude 65 wenigstens eine Gleichspannungsquelle 9 vorgehalten, die auch eine Batterieanlage 61 sein kann. Der Energieverteiler 3 ist mit wenigstens einer Berechnungseinheit 45, zum Beispiel einer Mikrokontrollerschaltung, ausgestattet. Endstromkreisseitig an dem Hauptverteiler 69 und ggf. an dem Unterverteiler 71 sind Verbraucher, so genannte Endstromkreise 13, angeschlossen. Einige der Endstromkreise 13 können Dauerlichtleuchten 17 mit und ohne entsprechenden Vorschaltgeräten 75 und Bereitschaftslichtleuchten 19 mit Zustandsfolgern 77 sein. Die Zustandsfolger 77 können mit und ohne integrierte Vorschaltgeräte aufgebaut sein. Teil des Beleuchtungsstrangs 15 ist der Abschnitt der Beleuchtungsmittel, also der Beleuchtungsmittelstrang 73. Der Energieverteiler 3, insbesondere die Berechnungseinheit 45 mit ihrer Peripherie und unter Zuhilfenahme von Messgeräten, wie dem Spannungswächter 63, protokolliert, archiviert und überwacht den Anlagenzustand 27 der Sicherheitsbeleuchtungsanlage 1. Die Sicherheitsbeleuchtungsanlage 1 befindet sich in der Regel in dem Allgemeinnutzerzustand 33, aus der sie durch besondere Eingaben, Passwörter oder sonstige zustandsändernde Eingriffe in einen Administratorzustand , wechseln kann. Der Energieverteiler 3, insbesondere als Hauptverteiler 69 oder Unterverteiler 71, leitet wenigstens zwei von vorzugsweise wenigstens drei Leitern L', L", N', N" über entsprechende Sicherungen durch. Vorzugsweise werden der Phasenleiter L', L" und der Nullleiter N', N" über den Energieverteiler geführt, während der Schutzleiter PE', PE" häufig nicht über den Energieverteiler 3 geführt ist. Beim Zusammenbruch der Versorgungsspannung und dem Rückgriff auf die Gleichspannungsquelle 9 wird aus dem Phasenleiter L', L" in der Regel der erste Energieleiter; z. B. ein Plusleiter, während der Nullleiter N', N" in der Regel ein zweiter Energieleiter, z. B. ein Minusleiter wird.

Die vorliegende Erfindung ist vorrangig an Hand eines Ausführungsbeispiels mit einigen Abwandlungen näher erläutert worden. Es gehören in den Schutzumfang der vorliegenden Erfindung genauso anderweitige, erfindungsgemäße Gestaltungen. Zum Umfang der vorliegenden Erfindung gehört es auch, wenn der Energieverteiler als eigenständige Baueinheit realisiert wird und der Mikrokontroller ein zusätzliches, nicht im Gehäuse des Energieverteilers angeordnetes Zusatzmodul ist, das Einfluss auf den Energieverteiler nehmen kann. Darüber hinaus offenbart die vorliegende Erfindungsbeschreibung auch noch weitere eigenständige erfinderische Aspekte, z. B. eine vorteilhafte graphische Anbindung von Gebäudeinstallationseinrichtungen.

**Bezugszeichenliste**

| Bezugszeichen | Bedeutung | Graphische Darstellung |
|---|---|---|
| 1 | Sicherheitsbeleuchtungsanlage | Fig. 1, Fig. 2, Fig. 5 |
| 3 | Energieverteiler | Fig. 5 |
| 5 | Zentralbatterieanlage | Fig. 5 |
| 7 | Gruppenbatterieanlage | Fig. 4 |
| 9 | Gleichspannungsquelle | Fig. 5 |
| 11 | Mischbetrieb | Fig. 1, Fig. 2, Fig. 5 |
| 13 | Endstromkreis | Fig. 4, Fig. 5 |
| 15 | Beleuchtungsstrang | Fig. 5 |
| 17 | Dauerlichtleuchte | Fig. 1, Fig. 2, Fig. 5 |
| 19 | Bereitschaftslichtleuchte | Fig. 1, Fig. 2, Fig. 5 |
| 21 | Status von Beleuchtungskörper | Fig. 2 |
| 23 | Positionsangabe | Fig. 1 |
| 25 | Anlagendaten | Fig. 1, Fig. 4 |
| 27 | Anlagenzustand | Fig. 2, Fig. 4, Fig. 5 |
| 29 | Webserver | Fig. 3, Fig. 4 |
| 31 | Browser bzw. Webbrowser | Fig. 2, Fig. 3, Fig. 4 |
| 33 | Allgemeinnutzerzustand | Fig. 5 |
| 35 | Administratorzustand | Fig. 1, Fig. 3 |
| 37 | Speicherbereich | Fig. 4 |
| 39 | Graphikspeicherbereich | Fig. 4 |
| 41 | Hintergrund | Fig. 1, Fig. 2 |
| 43 | Gebäudeplan | Fig. 1, Fig. 2 |
| 45 | Erste Berechnungseinheit | Fig. 4, Fig. 5 |
| 47, 47', 47" | Zweite Berechnungseinheit | Fig. 4 |
| 49 | Fernverbindung | Fig. 4 |
| 51 | Datensatz | Fig. 4 |
| 53 | Kommunikationsbus | Fig. 3, Fig. 4 |
| 55 | Schnittstelle | Fig. 4 |
| 57 | Webformular | Fig. 1, Fig. 2 |
| 59 | Versorgungsnetz | Fig. 5 |
| 61 | Batterieanlage | Fig. 4, Fig. 5 |
| 63 | Spannungswächter | Fig. 5 |
| 65 | Gebäude | Fig. 5 |
| 67 | Gebäudeinstallation | Fig. 5 |
| 69 | Hauptverteiler | Fig. 5 |
| 71 | Unterverteiler | Fig. 5 |
| 73 | Beleuchtungsmittelstrang | Fig. 5 |
| 75 | Vorschaltgerät | Fig. 5 |
| 77 | Zustandsfolger mit Vorschaltgerät | Fig. 5 |
| 79 | Steuerung | Fig. 4 |
| | | |
| 101 | Administratorseitenaufruf | Fig. 3 |
| 103 | Arbeitsspeicherallokation | Fig. 3 |
| 105 | Konfigurationskopie | Fig. 3 |
| 107 | HTML-Formulargenerierung | Fig. 3 |
| 109 | Konfigurationsanpassung | Fig. 3 |
| 111 | Ereignisaufruf | Fig. 3 |
| 113 | CGI-Übertragung | Fig. 3 |
| 115 | Parsing | Fig. 3 |
| 117 | Konfigurationsbestätigung | Fig. 3 |
| 119 | Residente Kopie | Fig. 3 |
| 121 | Blockdiagramm | Fig. 3 |
| | | |
| L', L" | Phase bzw. Plusleiter | Fig. 5 |
| N', N" | Nullleiter bzw. Minusleiter | Fig. 5 |
| PE', PE" | Schutzleiter bzw. Erdleiter | Fig. 5 |

## Patentansprüche

1. Mikrokontrollergesteuerter Energieverteiler (3) einer Sicherheitsbeleuchtungsanlagen (1), der im Mischbetrieb (11) wenigstens eine Dauerlichtleuchte (17) und wenigstens eine Bereitschaftslichtleuchte (19) betreiben kann,
**dadurch gekennzeichnet, dass**
der Energieverteiler (3) mit wenigstens einer Schnittstelle (55) für ein Hypertext Transfer Protocol ausgestattet ist
und in dessen Mikrokontroller (45) ein Webserver (29) installiert ist, mit dem Anlagendaten (25) der Sicherheitsbeleuchtungsanlage (1) verwaltet werden können.

2. Energieverteiler (3) nach Anspruch 1, **dadurch gekennzeichnet, dass** der Webserver (29), der die Schnittstelle (55) für das Hypertext Transfer Protocol bietet, nach einem Asynchronous JavaScript and XML-Mechanismus arbeitet, und die Verbindungsebene der Anlagendaten (25) darstellt.

3. Energieverteiler (3) nach einem der vorhergehenden Ansprüche, **dadurch gekennzeichnet, dass** die Anlagendaten (25) Positionsangaben (23) zu einzelnen Beleuchtungsmitteln (15, 17, 19), wie Bereitschaftslichtleuchten (19) und Dauerlichtleuchten (17), umfassen,
wobei vorzugsweise neben den Positionsangaben (23) auch Zustandsangaben (21) gespeichert sind, sodass der Energieverteiler (3) unter Rückgriff auf eine Gleichspannungsquelle (7, 9, 61) bei Netzspannungsausfall den Weiterbetrieb von zumindest einigen der Beleuchtungsmittel (17, 19) sicherstellen kann.

4. Energieverteiler (3) nach einem der vorhergehenden Ansprüche, **dadurch gekennzeichnet, dass** über die Schnittestelle (55) in einem asynchronen Modus Anlagendaten (25) auf Grund von externen Browseranforderungen in einer browserfähigen Form (113, 115) übermittelt (53) werden,
wobei vorzugsweise das Zurverfügungstellen der Anlagendaten (25) durch Javascript-Eventhandler derart initiierbar ist, dass die asynchrone Übertragung der Anlagendaten (25) während Änderungen der Anlagendaten (25) vorgenommen wird.

5. Energieverteiler (3) nach einem der vorhergehenden Ansprüche, **dadurch gekennzeichnet, dass** der Webserver (29) in einen Allgemeinnutzerzustand (33) und in einen Administratorzustand (35) einstellbarist,
wobei vorzugsweise die Anlagendaten (25) über ein Hypertext Transfer Protocol nur im Administratorzustand (35) veränderbar sind, während im Allgemeinnutzerzustand (33) die Anlagendaten (25) nur im Umfang beschränkt lesefähig sind.

6. Energieverteiler (3) nach Anspruch 5, **dadurch gekennzeichnet, dass** mit Eintritt in den Administratorzustand (35) ein Speicherbereich (37, 39) für den Mikrokontroller (45) dynamisch für Anlagendaten (25) so alloziert (103) wird, dass die gewünschten Anlagendaten (25) als Anlagendatensatz in wenigstens einem HTML-Formular vorliegen, insbesondere nachdem sie an einen Browser (31) übertragen worden sind,
wobei vorzugsweise der Anlagendatensatz in Abhängigkeit von über das Hypertext Transfer Protocol übertragene Ereignisse, insbesondere in Form von CGI-Parametersätzen (113), dynamisch angepasst wird und dabei der allozierte Speicherbereich (37, 39) dem erforderlichen Speicherplatz für eine temporäre Datenstruktur zur Veränderung wenigstens eines Anlagendatensatzes angepasst wird.

7. Energieverteiler (3) nach einem der vorhergehenden Ansprüche, **dadurch gekennzeichnet, dass** Anlagendaten (25) von wenigstens einem Energieverteiler (3) über die Schnittstelle (55) als XML-codierte Daten, die an eine übergeordnete Gebäudemanagementeinheit, z. B. an eine Berechnungseinheit (47, 47', 47"), insbesondere auf Anforderung der Berechnungseinheit (47, 47', 47"), übertragen werden.

8. Energieverteiler (3) nach einem der vorhergehenden Ansprüche, **dadurch gekennzeichnet, dass** in einem Flashfilesystem sowohl Daten von wenigstens einer Konfigurationsdatei als auch graphische Gebäudepläne (43) permanent ablegbar sind.

9. Energieverteiler (3) nach einem der vorhergehenden Ansprüche, **dadurch gekennzeichnet, dass** parallel zu den Anlagendaten für den Mikrokontroller (45) ein Graphikspeicherbereich (39) reserviert ist, in dem graphische Gebäudepläne (43), insbesondere über ein File Transfer Protocol, ablegbar sind.

10. Verwaltungs- und Steuerungsverfahren einer Sicherheitsbeleuchtungsanlage (1) zum Mischbetrieb (11) eines leitungsgebundenen Beleuchtungsmittelstrangs (15), das wenigstens zwei Berechnungseinheiten (45, 47, 47', 47") kommunikativ miteinander verbindet,
**dadurch gekennzeichnet, dass**
eine der Berechnungseinheiten (45) ein Mikrokontroller mit einem Webserver (29) ist, der über ein Hypertext Transfer Protocol an die zweite computertypische Berechnungseinheit (47, 47', 47") angebunden ist, um insbesondere über ein Asynchronous JavaScript and XML-Protocol Anlagendaten (25) der Sicherheitsbeleuchtungsanlage (1) zwischen erster und zweiter Berechnungseinheit (45, 47, 47', 47") auszutauschen.

11. Verwaltungs- und Steuerungsverfahren nach Anspruch 10, **dadurch gekennzeichnet, dass** auf der zweiten Berechnungseinheit (47, 47', 47"), die insbesondere über eine Fernverbindung (53) an die erste Berechnungseinheit (45) angebunden ist, ein Browser (31) läuft, der sich dynamisch anpassende Datensätze aus Anlagendaten (25) auf einem aus der ersten Berechnungseinheit (45) beziehbaren Hintergrund (41), der wenigstens ausschnittsweise ein Gebäude (65) der Sicherheitsbeleuchtungsanlage (1) darstellt, abbildet, wobei insbesondere einzelne Datensätze den Status (21) von Beleuchtungskörpern (17, 19) eines Beleuchtungsstrangs (15) graphisch darstellen.

12. Verwaltungs- und Steuerungsverfahren nach einem der Ansprüche 10 bis 11, **dadurch gekennzeichnet, dass**
über das Hypertext Transfer Protocol nur zu verändernde Daten übertragen werden, die nach einem Veränderungsvorgang automatisch für eine Speicherung aus dem Webserver (29) in einen Speicherbereich (37, 39) für die Anlagendaten (25) in der ersten Berechnungseinheit (45) abgelegt werden.

## Claims

1. Microcontroller-controlled power distributor (3) of an emergency lighting system (1), which can operate at least one maintained mode luminaire (17) and at least one non-maintained mode luminaire (19) in mixed maintained and non-maintained mode (11),
**characterised in that**
the power distributor (3) is equipped with at least one interface (55) for a Hypertext Transfer Protocol,
and a web server (29), which provides the interface (55) for the Hypertext Transfer Protocol and with which system data (25) of the emergency lighting system (1) can be managed, is installed in its microcontroller (45),
and which operates according to an Asynchronous JavaScript and XML mechanism.

2. Power distributor (3) according to Claim 1, **characterised in that** the web server (29) is the connecting layer of the system data (25).

3. Power distributor (3) according to one of the preceding claims, **characterised in that** the system data (25) comprise position data (23) of individual lighting means (15, 17, 19) such as non-maintained mode luminaires (19) and maintained mode luminaires (17),
wherein status data (21) is preferably stored in addition to the position data (23) so that the power distributor (3) can ensure continued operation of at least some of the lighting means (17, 19) in the event of a mains failure by having recourse to a DC voltage source (7, 9, 61).

4. Power distributor (3) according to one of the preceding claims, **characterised in that** system data (25) are transmitted (53) via the interface (55) in an asynchronous mode in a browser readable form (113,115) based on external browser requests,
wherein preferably the provision of the system data (25) can be initiated by JavaScript event handlers in such a mannerthatthe asynchronous transmission of the system data (25) is carried out during changes in the system data (25).

5. Power distributor (3) according to one of the preceding claims, **characterised in that** the web server (29) can be setto a general user state (33) and to an administrator state (35),
wherein the system data (25) can preferably only be changed by means of a Hypertext Transfer Protocol in the administrator state (35), whereas the system data (25) can only be read to a limited extent in the general user state (33).

6. Power distributor (3) according to Claim 5, **characterised in that**, when entering administrator state (35), a memory region (37, 39) is dynamically allocated (103) for the microcontroller (45) for system data (25) in such a manner that the desired system data (25) are present as a system data set in at least one HTML form, in particular after they have been transmitted to a browser (31),
wherein the system data set is preferably dynamically adapted as a function of events which are transmitted by means of the Hypertext Transfer Protocol, in particular in the form of CGI parameter sets (113), and the allocated memory region (37, 39) is adapted to the required memory space for a temporary data structure for changing at least one system data set.

7. Power distributor (3) according to one of the preceding claims, **characterised in that** system data (25) is transmitted by at least one power distributor (3) via the interface (55) as XML-coded data, which is transmitted to a superordinate building management unit, for example to a computation unit (47, 47', 47"), in particular at the request of the computation unit (47, 47', 47").

8. Power distributor (3) according to one of the preceding claims, **characterised in that** both data from at least one configuration file and also graphical building plans (43) can be stored permanently in a flash file system.

9. Power distributor (3) according to one of the preceding claims, **characterised in that**, in parallel to the system data for the microcontroller (45), a graphic memory region (39) is reserved, in which graphic building plans (43) can be stored, in particular by means of a File Transfer Protocol.

10. Management and control method of an emergency lighting system (1) for mixed maintained and non-maintained operation (11) of a wire-connected lighting circuit (15), which connects at least two computation units (45,47,47', 47") communicatively with each other,
**characterised in that**
one of the computation units (45) is a microcontroller with a web server (29) which is connected by means of a Hypertext Transfer Protocol to the second computer-typical computation unit (47, 47', 47"), in order in particular to exchange system data (25) of the emergency Lighting system (1) between the first and second computation unit (45, 47, 47', 47") by means of an Asynchronous JavaScript and XML Protocol.

11. Management and control method according to Claim 10, **characterised in that** a browser (31) runs on the second computation unit (47, 47', 47"), which is in particular connected to the first computation unit (45) by means of a remote connection (53), which browser (31) shows dynamically adapting data sets from system data (25) on a background (41), which can be derived from the first computation unit (45) and represents at least in sections a building (65) of the emergency lighting system (1), wherein in particular individual data sets graphically represent the status (21) of light sources (17,19) in a lighting circuit (15).

12. Management and control method according to one of Claims 10 to 11, **characterised in that** only data to be changed are transmitted by means of the Hypertext Transfer Protocol, which are automatically stored after a change in a memory region (37,39) for the system data (25) in the first computation unit (45) for a storage from the web server (29).

## Revendications

1. Distributeur d'énergie (3) commandé par microcontrôleur pour des installations d'éclairage de sécurité (1), ledit distributeur pouvant activer en mode mixte (11) au moins un luminaire pour éclairage de secours de type permanent (17) et au moins un luminaire pour éclairage de secours de type non-permanent (19) ;
**caractérisé en ce que** :
le distributeur d'énergie (3) est équipé d'au moins une interface (55) pour un protocole de transfert hypertexte HTP ;
et qu'un serveur Web (29) offrant l'interface (55) au protocole de transfert hypertexte HTP est installé dans le microcontrôleur (45) du distributeur d'énergie, avec lequel les données relatives aux installations (25) de l'installation d'éclairage de sécurité (1) peuvent être gérées ;
et qui fonctionne selon un mécanisme JavaScript et XML asynchrone.

2. Distributeur d'énergie (3) selon la revendication 1, **caractérisé en ce que** le serveur Web (29) présente le plan de connexion des données relatives aux installations (25).

3. Distributeur d'énergie (3) selon l'une quelconque des revendications précédentes, **caractérisé en ce que** les données relatives aux installations (25) comprennent des informations de position (23) sur les différents moyens d'éclairage (15, 17, 19) tels que les luminaires pour éclairage de secours de type non-permanent (19) et les luminaires pour éclairage de secours de type permanent (17) ;
des informations d'état (21) étant de préférence mémorisées en plus des informations de position (23), de sorte que le distributeur d'énergie (3) puisse garantir qu'au moins quelques-uns des moyens d'éclairage (17, 19) pourront continuer à fonctionner en cas de recours à une source de courant continu (7, 9, 61), en cas de panne de courant secteur.

4. Distributeur d'énergie (3) selon l'une quelconque des revendications précédentes, **caractérisé en ce que** :
l'interface (55) permet de transmettre (53) les données relatives aux installations (25) dans un mode asynchrone sous une forme permettant la navigation (113, 115) à la suite de demandes externes de navigation ;
la mise à disposition des données relatives aux installations (25) pouvant de préférence être initiées de telle sorte par un programme de traitement des événements Javascript que la transmission asynchrone des données relatives aux installations (25) est effectuée pendant la modification des données relatives aux installations (25).

5. Distributeur d'énergie (3) selon l'une quelconque des revendications précédentes, **caractérisé en ce que** :
le serveur Web (29) peut être réglé dans un état d'utilisation générale (33) et dans un état d'utilisation par l'administrateur (35),
les données relatives aux installations (25) ne pouvant de préférence être modifiées que dans l'état d'utilisation par l'administrateur (35) via un protocole de transfert hypertexte HTP, alors que les données relatives aux installations (25) ne sont en grande mesure accessibles qu'en lecture simple dans l'état d'utilisation générale (33).

6. Distributeur d'énergie (3) selon la revendication 5, **caractérisé en ce que** lorsque l'on passe dans l'état d'utilisation par l'administrateur (35), une zone de mémoire (37, 39) destinée au microcontrôleur (45) est allouée (103) de façon dynamique aux données relatives aux installations (25) de façon à ce que les données relatives aux installations (25) se trouvent dans au moins un formulaire HTML sous la forme d'un jeu de données relatives aux installations, notamment après transmission à un navigateur (31) ;
le jeu de données relatives aux installations pouvant de préférence être adapté de façon dynamique en fonction des événements transmis via le protocole de transfert hypertexte HTP, notamment sous la forme de jeux de paramètres CGI (113) et la zone de mémoire (37, 39) allouée pouvant ainsi être adaptée à la place nécessaire en mémoire pour une structure de données temporaire permettant de modifier au moins un jeu de données relatives aux installations.

7. Distributeur d'énergie (3) selon l'une quelconque des revendications précédentes, **caractérisé en ce que** les données relatives aux installations (25) sont transmises par au moins un distributeur d'énergie (3) par l'intermédiaire de l'interface (55) sous la forme de données XML codées transmises à une unité de gestion de bâtiment subordonnée, par exemple à une unité de calcul (47, 47', 47"), notamment à la demande de l'unité de calcul (47, 47', 47").

8. Distributeur d'énergie (3) selon l'une quelconque des revendications précédentes, **caractérisé en ce que** dans un système de fichier Flash, tant les données d'au moins un fichier de configuration que les plans de bâtiment graphiques (43) peuvent être classés de façon permanente.

9. Distributeur d'énergie (3) selon l'une quelconque des revendications précédentes, **caractérisé en ce que**, parallèlement aux données relatives aux installations destinées au microcontrôleur (45), une zone de mémoire graphique (39) est réservée dans laquelle des plans de bâtiment (43) graphiques peuvent être classés, notamment via un protocole de transfert de fichiers FTP.

10. Procédé de gestion et de pilotage d'une installation d'éclairage de sécurité (1) pour le fonctionnement en mode mixte (11) d'une chaîne de moyens d'éclairage (15) reliée au courant qui relie entre elles de façon communicante au moins deux unités de calcul (45, 47, 47', 47"),
**caractérisé en ce que** :
une des unités de calcul (45) est un microcontrôleur équipé d'un serveur Web (29) qui reste relié à la deuxième unité de calcul (47, 47' 47") informatique typique par l'intermédiaire d'un protocole de transfert hypertexte HTP, pour échanger notamment les données relatives aux installations (25) de l'installation d'éclairage de sécurité (1) entre la première et la seconde unité de calcul (45, 47, 47', 47") par l'intermédiaire d'un protocole JavaScript et XML asynchrone.

11. Procédé de gestion et de pilotage selon la revendication 10, **caractérisé en ce que** :
un navigateur (31) tourne sur la deuxième unité de calcul (47, 47', 47"), reliée notamment à la première unité de calcul (45) par l'intermédiaire d'une connexion à distance (53), ledit navigateur reproduisant des jeux de données adaptés de façon dynamique composés de données relatives aux installations (25) sur un arrière-plan (41) provenant de la première unité de calcul (45), qui représente au moins en partie un bâtiment (65) de l'installation d'éclairage de sécurité (1);
les différents jeux de données représentant notamment de façon graphique l'état (21) des corps d'éclairage (17, 19) d'une chaine d'éclairages (15).

12. Procédé de gestion et de pilotage selon l'une quelconque des revendications 10 à 11, **caractérisé en ce que** :
seules sont transmises par l'intermédiaire du protocole de transfert hypertexte HTP les données devant être modifiées, lesdites données étant classées automatiquement dans la première unité de calcul (45) suivant un processus de modification pour une mémorisation sur le serveur Web (29) dans une zone de mémoire (37, 39) prévue pour les données relatives aux installations (25).
